# NEW EUROPEAN PATENT SPECIFICATION

(11) **EP 0 320 001 B2**
(45) Date of publication and mention of the opposition decision: **10.06.1998**
(45) Mention of the grant of the patent: 22.06.1994
(21) Application number: 88120630.4
(22) Date of filing: 09.12.1988
(51) Int. Cl.: C08L 23/02, C08L 25/04, C08L 23/16

(54) **Elastoplastic compositions and process for preparing them**
Thermoplastische elastomere Zusammensetzungen und Verfahren zu deren Herstellung
Composition élastomères thermoplastiques et procédé pour leur préparation

(30) Priority: 11.12.1987 IT 2294687
(43) Date of publication of application: 14.06.1989
(73) Proprietor: MONTELL NORTH AMERICA INC., New Castle County Delaware (US)
(72) Inventor: Bassi, Mauro, I-44100 Ferrara (IT); Garagnani, Enea, I-44100 Ferrara (IT); Gorini, Giuseppe, I-44100 Ferrara (IT)
(74) Representative: Zumstein, Fritz, Dr.

(56) References cited:
- EP-A- 46 285
- EP-A- 230 212
- EP-A- 0 005 896
- EP-A- 0 109 375
- WO-A-87/05312
- DE-A- 3 532 357
- US-A- 4 130 535
- US-A- 4 690 976

## Description

The present invention relates to elastoplastic compositions comprising a continuous crystalline polyolefin phase and at least two polymeric phases dispersed in the polyolefin matrix, of which one phase consists of a dynamically cured EPOM rubber and the other phase consists of an amorphous and thermoplastic styrene polymer. The present invention relates also to shaped articles obtained from the above said compositions.

Elastoplastic compositions based on crystalline polymers of olefins and of dynamically cured EPDM rubbers are well known in literature.

Such compositions and the preparation thereof by mixing the components under rubber dynamic curing conditions are described in particular in U.S. patents 3,806,558, 4.130,535 and 4,311,628.

The compositions prepared by the dynamic curing method exhibit the drawback, which is common to all the compositions based on plastomeric resins and on cross-linked elastomers, of being the more difficult to be processed, the higher is the percentage of cross-linked elastomeric component contained in them.

For example, compositions comprising a cross-linked EPDM rubber in an amount higher than 70-75 % by weight referred to the polyolefin phase are fully unprocessable.

The most interesting curative systems utilized for the rubber curing exhibit furthermore the drawback of giving rise to remarkable corrosions phenomena of the equipment during mastication of the components.

Thus, there is a growing necessity to have available elastoplastic compositions which are readily processable and do not require the use of curative systems leading to the abovesaid corroson phenomena.

According to the disclosure of EP-A-005896, elastoplastic compositions having good processability can be obtained by mixing:
(A) EPM or EPDM type rubber;
(B) an amorphous propylene homopolymer or copolymer; and
(C) a crystalline polyolefin resin.

However, in order to keep the compositions processable, the rubber cannot be completely cured.

As a consequence, the elastic properties such as the compression set, are not satisfactory.

It was suggested, in the case of compositions comprising a crystailine olefinic polymer and a uncured saturated ethylene-propylene rubber, to incorporated styrene polymers into said compositions in order to improve the elastomeric charactenstics of the compositions (published Japanese patent application No. 17137/83).

The compositions disclosed in the Japanese application are prepared by hot mixing the polyolefin and the rubber, by operating in the presence of styrene and of a peroxide.

In these compositions the rubber is uncured, wherefore the processability problems, which are typical of the compositions in which the rubber is present in the cured state, are not encountered.

DE-A-35 32 357 discloses thermoplastic elastomers consisting of an EPDM rubber, polypropylene, a third polymer, an extender oil and, if appropriate, further usual constituents. As said third polymer a hydrogenated butadiene-styrene block copolymer is exemplified.

It has now surprisingly been found that it is possible to obtain elastoplastic compositions comprising a crystalline olefin polymer and a cured EPDM rubber, endowed with improved processability characteristics even in the presencs of a hign content of cured rubber, and wnich do not require the use of curative systems leading to corrosion phenomena, when the polyolefin phase comprises, besides the cured rubber, also a thermoplastic and amorphous styrene polymer in the form of dispersed particles, of which at least 80% have a maximum size below 5 µm.

Thus, the invention is directed to the following compositions:
1. Elastoplastic compositions comprising a continuous crystalline polyolefin phase and at least two polymeric phases dispersed in the polyolefin phase, one of which consists of an EPDM rubber and the other of an amorphous thermoplastic styrene polymer selected from graft copolymers of EPDM rubber on polystyrene or on styrene-acrylonitrile copolymers, wherein the EPDM rubber, which is dynamically cured, is a copolymer of propylene with ethylene and/or with an α-olefin of formula CH₂=CHR in which R is an alkyl radical having 2-10 carbon atoms, and with a copolymerizable diene, the weight ratio between polyolefin resin and EPDM rubber ranges from 10/90 to 75/25 and the weight ratio between styrene polymer and time polyolefin ranges from 10/90 to 60/40, in which at least 80% of the particles of the two dispersed phases have a maximum size of 5 µm.
2. Elastoplastic compositions comprising a continuous crystalline polyolefin phase and at least two polymeric phases dispersed in the polyolefin phase, one of which consists of a cured EPDM rubber and the other of an amorphous thermoplastic styrene homopolymer and further comprising a compatibilizing agent selected from graft copolymers of EPDM rubber on polystyrene or on styrene-acrylonitrile copolymers and graft copolymers of styrene on polyolefins wherein the EPDM rubber, which is dynamically cured, is a copolymer of propylene with ethylene and/or with an α-olefin of formula CH₂=CHR, in which R is an alkyl radical having 2-10 carbon atoms, and with a copolymerizable diene, the weight ratio between polyolefin resin and EPDM rubber ranging from 10/90 to 75/25 and the weight ratio between styrene polymer and poylolefins ranging from 10/90 to 60/40, in which at least 80% of the particles of the two dispersed phases have a maximum size of 5 µm.

The particle sizes of both the dispersed phases are such that at least 80% have a maximum size particularly below 2 µm.

Determination of the particle size is carried out by electronic microscopy.

The utilizable styrene polymers are amorphous polymers and copolymers within the above definitions having thermoplastic nature.

Examples of such polymers are "crystal" polystyrene (PS), impact polystyrene (HIPS) and the thermoplastic copolymers of styrene with acrylnitrile.

Polystyrene (PS and HIPS) and the copolymers of styrene with acrylonitrile containing up to 30% by weight of acrylonitrile are the preferred materials.

The compositions according to the present invention are prepared by means of a process in which the olefin polymer and the styrene polymer, homogeneousy mixed with each other, are additioned and mixed with EPDM rubber and the curative system is added to the resulting homogeneous blend, mastication of the blend being continued at a temperature between about 150° and 280°C for a time period in which rubber curing occurs.

In order to obtain dispersions, in which the sizes of the particles have the above-indicated values, it is necessary to utilize, during the homogenization step of the styrene homopolymer with the polyolefin resins, suitable compatiblizing agents selected from graft copolymers of styrene on polyolefins and graft copolymers of EPDM rubber on polystyrene or on styrene-acrylonitrile copolymers.

These compatibilizing agents are utilized in an amount generally ranging from 5 to 50% by weight calculated on the polyolefin-polystyrene blend.

With a view to obtaining a homogeneous dispersion of the polystyrene phase it is advisable to previously prepare an alloy with the polyolefin; such alloy is then utilized to prepare the elastoplastic compositions of the invention.

For the preparation of the alloys, all the methods suitable for obtaining an intimate mixing and homogenization of the components are utilizable. For example, it is possible to operate in an internal mixer or in an extruder or in a system composed of a mixer and a granulator.

For example, an alloy can be properly prepared by dry-mixing the polyolefin in a turbomixer,and optionally HIPS polystyrene, in the presence of a peroxide and of styrene added in such amount as to form the desired percentage of polystyrene homopolymer and of graft copolymer of styrene on the polyolefin. It is operated at temperatures at which no softening and consequent thickening of the polymer can occur.

As regards the sizes of the dispersed particles of the styrene polymer present in the alloys, it has been found that final compositions can be obtained still having satisfactory properties even when the dispersed phase or at least 80% of it has a maximum size of 40 µm.

The useful crystalline polyolefin resins comprise (high, mean or low density) polyethylene and the polymers of the alpha olefins of formula CH₂ =CHR in which R is an alkyl radical of 1-8 carbon atoms prepared by using Ziegler-Matta stereospecific catalysts.

High isotacticity index polypropylene is the preferred polymer. Further useful alpha polyolefins are polybutene, poly-4-methyl-1-pentene, polyhexene.

In the compositions of the invention the olefin polymer can be present in a modified form as compared with the starting polymer. That is due to interactions with the curative system. the styrene polymer and the EPOM rubber, which can cause also a sensible lowering of the crystalline melting point (determined by D.S.C.).

The EPOM rubbers are copolymers of propylene with ethylene and/or with another alpha olefin having formula CH₂ =CHR in which R is an alkyl radical of 2-10 carbon atoms, and with a diene monomer which is present preferably in an amount ranging from 1 to 10% by weight calculated on the copolymer total weight. Preferably the diene is of the non-conjugated type.

Suitable diene monomers are for example 1,4-hexadiene; 2-methyl-1,4pentadiene; 1,4,9-decatriene; 1,5-cyclooctadiene; 1-methyl-1,5-cyclooctadiene; 1,4-cyclopentadiene; dicyclopentadiene; ethylidenenorbornene; 4-methyl-1,4-hexadiene; 5-methyl-1,4-hexadiene; the substitution derivatives of such monomers.

Examples of olefin monomers of formula CH₂ =CHR are propylene, 1-butene, 1-pentene, 1-hexene, 4-methyl-1-pentene, 3-methyl-1-pentene, 3,3-dimethyl-1-butene, 3-methyl-1-hexene, 2,4,4-trimethyl-1-pentene,

The ethylene-propylene-diene terpolymers containing from 25 to 50% by weight of copolymerized propylene units are preferred.

In the compositions, the olefin polymer/EPDM rubber ratio is in the range of from 10/90 to 75/25, e.g. from 10/90 to 60/40 and preferably from 15/85 to 50/50; the styrene polymer/polyolefin ratio is generally in the range of from 10/90 to 60/40 and preferably from 30/70 to 50/50.

The ratio between the total weight of the polyolefin and of the styrene polymer and the weight of the EPOM rubber generally ranges from 20/80 to 70/30 and preferably from 25/75 to 60/40.

Mineral fillers, carbon black, colored pigments, plasticizers, stabilizers, extender oils, and in general all the conventional ingredients of the elastoplastic compositions comprising EPDM rubbers can be present in the compositions of the invention.

The compositions are prepared by masticating homogeneous blends of the components, under EPDM rubber dynamic curing conditions.

It is possible to operate according to the dynamic curing methods described in U.S. patents 4,130,535 and 4,311,628, utilizing the curative systems therein described.

However it has been found - this being an additional feature of the invention - that it is not necessary, for preparing the compositions of the invention, to use curative systems of corrosive nature like those comprising a phenolic resin and an activator.

A fully unexpected result resides in that it is sufficient to use a non-halogenated phenolic resin alone without using activators such as hydrated tin salts and organic acids such as the oxalic, salicyclic, malonic and succinic acids.

Non-halogenated phenolic resins are described in U.S. patents 3,287,440, 3,709,840 and 4,311,628. Useful non-halogenated resins are also available on the market; for example, such resins can be purchased from Schenectady Chemicals Inc. under the trade name FXRA-148.

The temperature conditions under which mastication is conducted (ranging from 150° to 280°C) and the shear rate employed (300-400 s-') are furthermore sensibly lower than the ones utilized so far.

According to a preferred procedure, a homogeneous blend of olefin polymer, styrene polymer with the EPDM rubber and, optionally, with fillers is prepared by operating at a temperature sufficient to melt the olefin polymer and for a time sufficient to obtain a homogeneous blend. The phenolic resin is then added and mastication is continued at a temperature at which rubber cure occurs.

Preferably, the EPDM rubber is fully cured. Full curing of the rubber means the cure in which the rubber is extractable for less than 2% with cyclohexane at room temperature or for less than 4% with boiling xylene (as regards the methods of determining the extractability in cyclohexane and xylene, reference is made to U.S. patent 4,806,558).

The blending and/or mastication process can be carried out in an internal mixer, or in an extruder, or in a system consisting of an internal mixer and of a granulator.

It is possible also to operate in a plurality of apparatuses arranged in series, in the first ones the intimate blending and homogenization of the composition occurs while curing takes place in the others.

The mastication temperature at which curing occurs is generally in the range from 150° to 280°C and preferably from 180° to 220°C.

The following examples are given merely to illustrate the invention and are not to be considered as a limitation of the scope thereof.

### Example 1

Table 1 shows the composition of a reactive mixture utilized for the preparation of polypropylene-polystyrene alloys useful to prepare the elastoplastic compositions of the invention.

**Table 1**

| COMPOSITION OF THE REACTIVE MIXTURE AND OF THE THERMOPLASTIC ALLOYS SO OBTAINED | | | |
|---|---|---|---|
| Thermoplastic alloy | | 1 | 2 |
| Reactive mixture composition (parts by weight) | Polypropylene (PP) (Moplen® FL X020) | 64.2 | 49.1 |
| | t.butylperoxypivalate (in solution at 15%) | 1.0 | 1.2 |
| | Impact polystyrene (HIPS) | -- | 34.6 |
| | Styrene | 34.5 | 14.8 |
| | Irganox® 1010 (*) | 0.2 | 0.2 |
| | SHT (**) | 0.1 | 0.1 |
| Alloy composition (parts by weight) | Polypropylene | 60 | 45 |
| | Polystyrene (PS) | 30 | -- |
| | HIPS + PS | -- | 45 |
| | PP-g-PS graft copolymer + PP-g-S | 10 | -- |
| | PP-g-HIPS graft copolymer + PP-g-S | -- | 10 |

| | | | |
|---|---|---|---|
| (*) a phenolic stabilizer sold by Ciba-Geigy (based on pentaerythrityl tetrakis (3,5-ditert-butyl-4-hydroxyphenyl propionate) | | | |
| (**)synthetic hydrotalcite | | | |

The alloys were prepared under dry conditions by using a turbomixer operating in a nitrogen atmosphere.

To the polypropylene in flakes and to the HIPS in pellets, if any, the peroxide and subsequently, under heating and in small batches, the styrene were added.

After the styrene was fully added in 1 hour, stirring was continued for additional 2 hours under slight cooling to prevent the temperature from exceeding 130°C in order to avoid softening and consequent thickening of the polymer.

The products were gradually cooled and then stabilized with 0.2% of Irganox® 1010 and 0.1% of SHT, whereafter they were extruded at 210°C.

Selective extractions with methylethylketone and chloroform and subsequent infrared analyses, carried out on the various fractions, revealed in both products the presence of about 10% of polystyrene-g-polypropylene graft copolymer.

The maximum size of the dispersed styrene polymer phase was for at least 80% of less than 2 um.

Table 2 shows the compositions and the main characteristics of the elastoplastic compositions prepared from the polymeric alloys defined in Table 1.

**Table 2**

| ELASTIC AND RHEOLOGICAL CHARACTERISTICS OF THE ELASTOPLASTIC COMPOSITIONS | | | |
|---|---|---|---|
| Sample | 1 (comparative) | 2 | 3 |
| Ethylene-propylene-ethylidene-norbornene terpolymer* (Dutral® TER 537 E2) | 64 | 64 | 64 |
| Polypropylene (Moplen® Q 30P) | 6.5 | -- | -- |
| Impact- polystyrene | 6.5 | -- | -- |
| Thermoplastic alloy 2 of Table 1 | -- | 13 | -- |
| Thermoplastic alloy 1 of Table 1 | -- | -- | 13 |
| Master FX-RA-148 of Schenectady** | 7.2 | 7.2 | 7.2 |
| p-toluenesulfonic acid | 0.4 | 0.4 | 0.4 |
| Zinc oxide | 7.4 | 7.4 | 7.4 |
| Oil | 8 | 8 | 8 |
| PP/(PP + EPDM) ratio | 0.169 | 0.155 | 0.196 |
| Pressure, in kg/cm², (KPa) recorded in TR 15 at 230°C and a take-off rate of 9.5 cc/minute | 150 (15000) | 110 (11000) | 75 (7500) |
| Extrudate appearance | not smooth | smooth | smooth |
| Tension set at 23°C at 200%, % | breaks | 20 | 20 |
| Compression set at 100°C, 22 hours, % | 45 | 27 | 23 |

| | | | |
|---|---|---|---|
| * containing 50% by weight of extender oil. | | | |
| ** Master FX-RA-148 is composed of : 50% of phenolic resin SP 1045 50% of barium sulfate. | | | |

The compositions reported herein, analogously with all the ones of the following examples, were prepared by introducing the polymeric components into a Brabender internal mixer and, after a short mixing period, by adding the curing system and subsequently the zinc oxide and the extender oil.

Thereafter the mixing was carried out for 3 minutes at a temperature of 200°C.

The composition was then discharged from the internal mixer and was subjected to the following determinations :
- Processability, by measuring the head pressure during extrusion tests in an extruder. In such tests, the extruder was of type TR 15 (single-screw, 15 mm diameter), and it was operated at a temperature of 230°C, with a 2.5 mm ID die, a LID ratio = 20 and at a take-off rate of 9.5 cc/minute.
- Tension set at 200%, measured at 23 C, according to ASTM D-412.
- Compression set after 22 hours at 100°C, according to ASTM D-395.

The advantages deriving from the use of the alloys comprising the amorphous styrene phase are apparent also for the harder elastoplastic compositions having higher crystalline olefin resin/elastomeric terpolymer ratios (see Table 3).

Dutral@ TER 537 E2 is an EPDM rubber produced by DUTRAL S.p.A.; Moplen® Q 30P is sold by HIMONT ITALIA S.p.A.

**Table 3**

| ELASTIC AND RHEOLOGICAL CHARACTERISTICS OF ELASTOPLASTIC COMPOSITIONS BASED ON THERMOPLASTIC ALLOY 2 | | | | |
|---|---|---|---|---|
| Sample | 4 (comparative) | 5 | 6 (comparative) | 7 |
| Dutral® TER 537 E2 * | 59 | 59 | 52 | 52 |
| Moplen® Q 30P | 18 | -- | 25 | -- |
| Thermoplastic alloy 2 (see Table 1) | -- | 18 | -- | 25 |
| Master FX-RA-148 produced by Schenectady | 7.2 | 7.2 | 7.2 | 7.2 |
| p-toluenesulfonic acid | 0.4 | 0.4 | 0.4 | 0.4 |
| Zinc oxide | 7.4 | 7.4 | 7.4 | 7.4 |
| Oil | 8 | 8 | 8 | 8 |
| PP/(PP + EPDM) ratio | 0.379 | 0.215 | 0.490 | 0.302 |
| Pressure, in Kg/cm² (KPa) recorded in TR 15 at 230°C at a take-off rate of 9.5 cc/minute | 50 (5000) | 25 (2500) | 40 (4000) | 25 (2500) |
| Tension set at 23°C at 200%, % | breaks | breaks | breaks | breaks |
| Compression set at 100°C, 22 h, % | 36 | 34 | 64 | 55 |
| Hardness, Shore A | 70 | 70 | 85 | 85 |

| | | | | |
|---|---|---|---|---|
| * containing 50% by weight of extender oil. | | | | |

In the elastoplastic compositions of Table 2 (samples 2 and 3) and Table 3 (samples 5 and 7) more than 90% of the particles of the dispersed phase have a maximum size below 2 µm.

### Example 2

Table 4 shows the compositions of various alloys. utilized for preparing the elastoplastic compositions.

**Table 4**

| COMPOSITIONS OF THE ALLOYS UTILIZED FOR PREPARING ELASTOPLASTIC COMPOSITIONS | | |
|---|---|---|
| Alloy | 3 | 4 |
| Moplen® Q 30P | 50 | 50 |
| Ultrastyr® W 275 * | 50 | -- |
| Ultrastyr® AES Y42 ** | -- | 50 |

| | | |
|---|---|---|
| * Ultrastyr® W 275 is a polystyrene grafted with 10% of Dutral® TER 044 (Ultrastyr is a product sold by MONTEDIPE S.p.A.) | | |
| ** Ultrastyr® AES Y42 is a styrene-acrylonitrile copolymer (75% S - 25% AN) grafted with 30% of Dutral® TER 044 (EPDM rubber sold by DUTRAL S.p.A.). | | |

Table 5 shows compositions and main characteristics of the compositions prepared from the above-indicated alloys. In alloy 3, the maximum size of more than 80% of the dispersed phase present in alloy 3 was of 40 µm.

**Table 5**

| ELASTIC AND RHEOLOGICAL CHARACTERISTICS OF ELASTOPLASTIC COMPOSITIONS | | |
|---|---|---|
| Sample | 8 | 9 |
| Dutral® TER 537 E2* | 64 | 64 |
| Thermoplastic alloy 3 (see Table 4) | 13 | -- |
| Thermoplastic alloy 4 (see Table 4) | - | 13 |
| Master FX-RA-148 of Schenectady | 7.2 | 7.2 |
| p-toluenesulfonic acid | 0.4 | 0.4 |
| Zinc oxide | 7.4 | 7.4 |
| Oil | 8 | 8 |
| PP/(PP + EPDM) ratio | 0.169 | 0.169 |
| Pressure, in Kg/cm² (KPa) recorded in TR 15 at 230°C at a take-off rate of 9.5 cc/minute | 80 (8000) | 110 (11000) |
| Extrudate appearance | smooth | smooth |
| Tension set at 23°C at 200%, % | 21 | 20 |
| Compression set at 100°C, 22 h, % | 27 | 25 |

| | | |
|---|---|---|
| * containing 50% by weight of extender oil | | |

### Example 3

Example 3 regards compositions in which a non-halogenated phenolic resin alone is used as a curative. Table 6 shows the compositions and characteristics of such compositions.

**Table 6**

| COMPOSITION AND CHARACTERISTICS OF ELASTOPLASTIC COMPOSITIONS CURED IN THE ABSENCE OF P-TOLUENESULFONIC ACID | | |
|---|---|---|
| Sample | 10 | 11 (comparison) |
| Dutral® TER 537 E2 (50% oil) | 68 | 71.5 |
| Moplen® Q 30P | 8.5 | 9 |
| Ultrastyr® W 275 | 4 | -- |
| Master FX-RA-148 of Schenectady | 4 | 4 |
| Zinc oxide | 7.5 | 7.5 |
| Oil | 8 | 8 |
| PP/(PP + EPDM) ratio | 0.200 | 0.20 |
| Pressure, in Kg/cm² recorded in TR 15 at 230°C at a take-off rate of 9.5 cc/minute rate of 9.5 cc/minute | 100 | 80 |
| Extrudate appearance | smooth | melt fracture |
| Tension set at 23°C at 200%, % | 14 | breaks |
| Compression set at 100°C, 22 h, % | 16 | 20 |
| Hardness, Shore A | 56 | 58 |

## Claims (Claims for the following Contracting State(s): AT, BE, CH, DE, FR, GB, IT, LI, NL, SE)

1. Elastoplastic compositions comprising a continuous crystalline polyolefin phase and at least two polymeric phases dispersed in the polyolefin phase, one of which consists of an EPDM rubber and the other of an amorphous thermoplastic styrene polymer selected from graft copolymers of EPDM rubber on polystyrene or on styrene-acrylonitrile copolymers, wherein the EPDM rubber, which is dynamically cured, is a copolymer of propylene with ethylene and/or with an α-olefin of formula CH₂=CHR in which R is an alkyl radical having 2-10 carbon atoms, and with a copolymerizable diene, the weight ratio between polyolefin resin and EPDM rubber ranges from 10/90 to 75/25 and the weight ratio between styrene polymer and the polyolefin ranges from 10/90 to 60/40, in which at least 80% of the particles of the two dispersed phases have a maximum size of 5 µm.

2. The compositions of claim 1 in which the polyolefin is high isotactic polypropylene.

3. Elastoplastic compositions comprising a continuous crystalline polyolefin phase and at least two polymeric phases dispersed in the polyolefin phase, one of which consists of a cured EPDM rubber and the other of an amorphous thermoplastic styrene homopolymer and further comprising a compatibilizing agent selected from graft copolymers of EPDM rubber on polystyrene or on styrene-acrylonitrile copolymers and graft copolymers of styrene on polyolefins, wherein the EPDM rubber, which is dynamically cured, is a copolymer of propylene with ethylene and/or with an α-olefin of formula CH₂=CHR, in which R is an alkyl radical having 2-10 carbon atoms, and with a copolymerizable diene, the weight ratio between polyolefin resin and EPDM rubber ranging from 10/90 to 75/25 and the weight ratio between styrene polymer and poylclefins ranging from 10/90 to 60/40, in which at least 80% of the particles of the two dispersed phases have a maximum size of 5 µm.

4. The compositions of claims 1, 2 and 3 in which the EPDM rubber is fully cured.

5. The compositions of claim 3 in which the polyolefin is high isotactic polypropylene and the styrene polymer is selected from polystyrene and impact-resistant polystyrene.

6. The compositions of the preceding claims in which the compositions comprise an extender oil and a mineral filler.

7. A process for preparing the compositions as claimed in claims 1 to 2 or 4 or 6 in which the olefin polymer, the styrene polymer, homogeneously mixed with each other are additioned and mixed with the EPDM rubber and the curative system is added to the resulting homogeneous blend, mastication of the blend being continued at a temperature between about 150°C and 280°C for a time period in which rubber curing occurs.

8. A process for preparing the compositions as claimed in claims 3 to 6 in which the olefin polymer, the styrene polymer and the compatibilizing agent, homogeneously mixed with each other are additioned and mixed with the EPDM rubber and the curative system is added to the resulting homogeneous blend, mastication of the blend being continued at a temperature between about 150°C and 280°C for a time period in which rubber curing occurs.

9. The process of claim 7 or 8 in which the EPDM rubber undergoes a dynamic cure in the presence of a curing system consisting of a non-halogenated phenolic resin utilized in an amount of from 1 to 10 parts by weight for 100 parts of rubber.

10. The process of claims 7 to 9 in which the EPDM rubber is fully cured.

11. Shaped articles obtained from the compositions defined in one or more of claims 1 to 6 and prepared according to a process as defined in one or more of claims 7 to 10.

## Claims (Claims for the following Contracting State(s): ES)

1. A process for preparing elastoplastic compositions comprising a continuous crystalline polyolefin phase and at least two polymeric phases dispersed in the polyolefin phase, one of which consists of a dynamically cured EPDM rubber and the other of an amorphus thermoplastic styrene polymer selected from graft copolymers of EPDM rubber on polystyrene or on styrene-acrylonitrile copolymers, wherein the EPDM rubber is a copolymer of propylene with ethylene and/or an α-olefin of formula CH₂=CHR in which R is an alkyl radical having 2-10 carbon atoms, and with a copolymerizable diene, the weight ratio between polyolefin resin and EPDM rubber ranges from 10/90 to 75/25 and the weight ratio between styrene polymer and the polyolefin ranges from 10/90 to 60/40, in which at least 80% of the particles of the two dispersed phases have a maximum size of 5 µm; in said process the olefin polymer and styrene polymer, homogeneously mixed with each other, are additioned and mixed with the EPDM rubber and the curative system is added to the resulting homogeneous blend, mastication of the blend being continued at a temperature between about 150°C and 280°C for a time period in which rubber curing occurs.

2. The process as claimed in claim 1 wherein the olefin polymer is high isotactic polypropylene.

3. A process for preparing elastoplastic compositions comprising a continuous crystalline polyolefin phase and at least two polymeric phases dispersed in the polyolefin phase, one of which consists of a dynamically cured EPDM rubber and the other of an amorphus thermoplastic styrene homopolymer and further comprising a compatibilizing agent selected from graft copolymers of EPDM rubber on polystyrene or on styrene-acrylonitrile copolymers and graft copolymers of styrene on polyolefins, wherein the EPDM rubber is a copolymer of propylene with ethylene and/or an α-olefin of formula CH₂=CHR in which R is an alkyl radical having 2-10 carbon atoms, and with a copolymerizable diene, the weight ratio between polyolefin resin and EPDM rubber ranges from 10/90 to 75/25 and the weight ratio between styrene polymer and the polyolefin ranges from 10/90 to 60/40, in which at least 80% of the particles of the two dispersed phases have a maximum size of 5 µm; in said process the olefin polymer, the styrene polymer and the compatibilizing agent, homogeneously mixed with each other, are additioned and mixed with the EPDM rubber and the curative system is added to the resulting homogeneous blend, mastication of the blend being continued at a temperature between abcut 150°C and 280°C for a time period in which rubber curing occurs.

4. The processes as claimed in claims 1, 2 and 3 in which the EPDM rubber is fully cured.

5. The process as claimed in claims 3 and 4 in which the olefin polymer is high isotactic polypropylene and the styrene polymer is selected from polystyrene and impact resistant polystyrene.

6. The processes of the preceding claims in which an extender oil and mineral filler are added and mixed.

7. The process of claims 1 to 6 wherein the cure of the EPDM rubber is a dynamic process that is carried out in the presence of a curing system consisting of a non-halogenated phenolic resin utilized in an amount of from 1 to 10 parts by weight for 100 parts of rubber.

## Patentansprüche (Patentansprüche für folgende(n) Vertragsstaat(en): AT, BE, CH, DE, FR, GB, IT, LI, NL, SE)

1. Elastoplastische Zusammensetzungen, umfassend eine kontinuierliche, kristalline Polyolefinphase und zumindest zwei in der Polyolefinphase dispergierte polymere Phasen, von denen eine aus einem EPDM-Kautschuk und die andere aus einem amorphen, thermoplastischen Styrolpolymeren, ausgewählt unter Pfropfcopolymeren von EPDM-Kautschuk auf Polystyrol oder auf Styrol-Acrylnitril-Copolymeren, besteht, worin der EPDM-Kautschuk, der dynamisch gehärtet ist, ein Copolymeres von Propylen mit Ethylen und/oder mit einem α-Olefin der Formel CH₂=CHR, in der R für einen Alkylrest mit 2 bis 10 Kohlenstoffatomen steht, und mit einem copolymerisierbaren Dien ist, das Gewichtsverhältnis zwischen Polyolefinharz und EPDM-Kautschuk im Bereich von 10/90 bis 75/25 liegt und das Gewichtsverhältnis zwischen dem Styrolpolymeren und dem Polyolefin im Bereich von 10/90 bis 60/40 liegt, worin zumindest 80% der Teilchen der beiden dispergierten Phasen eine maximale Größe von 5 µm aufweisen.

2. Zusammensetzungen gemäß Anspruch 1, worin das Polyolefin hoch isotaktisches Polypropylen ist.

3. Elastoplastische Zusammensetzungen, umfassend eine kontinuierliche, kristalline Polyolefinphase und zumindest zwei in der Polyolefinphase dispergierte polymere Phasen,von denen eine aus einem gehärteten EPDM-Kautschuk und die andere aus einem amorphen, thermoplastischen Styrolhomopolymeren besteht, und weiterhin umfassend ein Kompatibilisierungsmittel, ausgewählt unter Pfropfcopolymeren von EPDM-Kautschuk auf Polystyrol oder auf Styrol-Acrylnitril-Copolymeren und Pfropfcopolymeren von Styrol auf Polyolefinen, worin der EPDM-Kautschuk, der dynamisch gehärtet ist, ein Copolymeres von Propylen mit Ethylen und/oder mit einem α-Olefin der Formel CH₂=CHR, worin R für einen Alkylrest mit 2 bis 10 Kohlenstoffatomen steht, und mit einem copolymerisierbaren Dien ist, wobei das Gewichtsverhältnis zwischen Polyolefinharz und EPDM-Kautschuk im Bereich von 10/90 bis 75/25 liegt und das Gewichtsverhältnis zwischen Styrolpolymerem und Polyolefinen im Bereich von 10/90 bis 60/40 liegt, worin zumindest 80% der Teilchen der beiden dispergierten Phasen eine maximale Größe von 5µm aufweisen.

4. Zusammensetzungen gemäß den Ansprüchen 1, 2 und 3, worin der EPDM-Kautschuk vollständig gehärtet ist.

5. Zusammensetzungen gemäß Anspruch 3, worin das Polyolefin hoch isotaktisches Polypropylen ist und das Styrolpolymere unter Polystyrol und schlagfestem Polystyrol ausgewählt ist.

6. Zusammensetzungen gemäß den vorhergehenden Ansprüchen, worin die Zusammensetzungen ein Strecköl und einen mineralischen Füllstoff umfassen.

7. Verfahren zur Herstellung der Zusammensetzungen, wie in den Ansprüchen 1 bis 2 oder 4 oder 6 beansprucht, worin das Olefinpolymere, das Styrolpolymere, homogen miteinander vermischt, versetzt und gemischt werden mit dem EPDM-Kautschuk und das Härtungssystem zu der resultierenden, homogenen Mischung zugesetzt wird, wobei das Kneten der Mischung bei einer Temperatur zwischen etwa 150°C und 280°C während einer Zeitdauer, innerhalb derer die Kautschukhärtung stattfindet, fortgeführt wird.

8. Verfahren zur Herstellung der Zusammensetzungen, wie in den Ansprüchen 3 bis 6 beansprucht, worin das Olefinpolymere, das Styrolpolymere und das Kompatibilisierungsmittel, homogen miteinander vermischt, versetzt und gemischt werden mit dem EPDM-Kautschuk und das Härtungssystem zu der resultierenden, homogenen Mischung zugesetzt wird, wobei das Kneten der Mischung bei einer Temperatur zwischen etwa 150°C und 200°C während einer Zeitdauer, innerhalb derer die Kautschukhärtung stattfindet, fortgeführt wird.

9. Verfahren gemäß Anspruch 7 oder 8, worin der EPDM-Kautschuk in Gegenwart eines Härtungssystems, bestehend aus einem nicht-halogenierten Phenolharz, das in einer Menge von 1 bis 10 Gew.Teilen je 100 Teile Kautschuk verwendet wird, einer dynamischen Härtung unterzogen wird.

10. Verfahren gemäß den Ansprüchen 7 bis 9, worin der EPDM-Kautschuk vollständig gehärtet wird.

11. Formgegenstände, erhalten aus den Zusammensetzungen gemäß einem oder mehreren der Ansprüche 1 bis 6 und hergestellt gemäß einem Verfahren, wie in einem oder mehreren der Ansprüche 7 bis 10 definiert.

## Patentansprüche (Patentansprüche für folgende(n) Vertragsstaat(en): ES)

1. Verfahren zur Herstellung von elastoplastischen Zusammensetzungen, umfassend eine kontinuierliche, kristalline Polyolefinphase und zumindest zwei in der Polyolefinphase dispergierte polymere Phasen, von denen eine aus einem dynamisch gehärteten EPDM-Kautschuk und die andere aus einem amorphen, thermoplastischen Styrolpolymeren, ausgewählt unter Pfropfcopolymeren von EPDM-Kautschuk auf Polystyrol oder auf Styrol-Acrylnitril -Copolymeren, besteht, worin der EPDM-Kautschuk ein Copolymeres von Propylen mit Ethylen und/ oder einem α-Olefin der Formel CH₂=CHR, worin R für einen Alkylrest mit 2 bis 10 Kohlenstoffatomen steht, und mit einem copolymerisierbaren Dien ist, das Gewichtsverhältnis zwischen Polyolefinharz und EPDM-Kautschuk im Bereich von 10/90 bis 75/25 liegt und das Gewichtsverhältnis zwischen Styrolpolymerem und dem Polyolefin im Bereich von 10/90 bis 60/40 liegt, worin zumindest 80% der Teilchen der beiden dispergierten Phasen eine maximale Größe von 5 µm besitzen; in welchem Verfahren das Olefinpolymere und das Styrolpolymere, miteinander homogen vermischt, versetzt werden und gemischt werden mit EPDM-Kautschuk und das Härtungssystem zu der resultierenden homogenen Mischung zugesetzt wird, wobei das Kneten der Mischung bei einer Temperatur zwischen etwa 150°C und 280°C während einer Zeitdauer, innerhalb derer das Härten des Kautschuks stattfindet, fortgeführt wird.

2. Verfahren gemäß Anspruch 1, worin das Olefinpolymere hoch isotaktisches Polypropylen ist.

3. Verfahren zur Herstellung von elastoplastischen Zusammensetzungen, umfassend eine kontinuierliche, kristalline Polyolefinphase und zumindest zwei in der Polyolefinphase dispergierte polymere Phasen, von denen eine aus einem dynamisch gehärteten EPDM-Kautschuk und die andere aus einem amorphen, thermoplastischen Styrolhomopolymeren besteht, und weiterhin umfassend ein Kompatibilisierungsmittel, ausgewählt unter Pfropfcopolymeren von EPDM-Kautschuk auf Polystyrol oder auf Styrol-Acrylnitril-Copolymeren und Pfropfcopolymeren von Styrol auf Polyolefinen, worin der EPDM-Kautschuk ein Copolymeres von Propylen mit Ethylen und/oder einem α-Olefin der Formel CH₂=CHR, worin R für einen Alkylrest mit 2 bis 10 Kohlenstoffatomen steht, und mit einem copolymerisierbaren Dien ist, das Gewichtsverhältnis zwischen Polyolefinharz und EPDM-Kautschuk im Bereich von 10/90 bis 75/25 liegt und das Gewichtsverhältnis zwischen Styrolpolymerem und dem Polyolefin im Bereich von 10/90 bis 60/40 liegt, worin zumindest 80% der Teilchen der beiden dispergierten Phasen eine maximale Größe von 5 µm besitzen; in welchem Verfahren das Olefinpolymere, das Styrolpolymere und das Kompatibilisierungsmittel, homogen miteinander vermischt, versetzt werden und gemischt werden mit dem EPDM-Kautschuk und das Härtungssystem der resultierenden homogenen Mischung zugesetzt wird, wobei das Kneten der Mischung bei einer Temperatur zwischen etwa 150°C und 280°C während einer Zeitdauer, innerhalb derer die Härtung des Kautschuks stattfindet, fortgeführt wird.

4. Verfahren gemäß den Ansprüchen 1, 2 und 3, worin der EPDM-Kautschuk vollständig gehärtet wird.

5. Verfahren gemäß den Ansprüchen 3 und 4, worin das Olefinpolymere hoch isotaktisches Polypropylen ist und das Styrolpolymere unter Polystyrol und schlagfestem Polystyrol ausgewählt wird.

6. Verfahren gemäß den vorhergehenden Ansprüchen, worin ein Strecköl und mineralischer Füllstoff zugesetzt und gemischt werden.

7. Verfahren gemäß den Ansprüchen 1 bis 6, worin die Härtung des EPDM-Kautschuks ein dynamisches Verfahren ist, das in Gegenwart eines Härtungssystems, bestehend aus einem nicht-halogenierten Phenolharz, welches in einer Menge von 1 bis 10 Gew.Teilen je 100 Teile Kautschuk verwendet wird, durchgeführt wird.

## Revendications (Revendications pour l'(les) Etat(s) contractant(s) suivant(s): AT, BE, CH, DE, FR, GB, IT, LI, NL, SE)

1. Des compositions élastoplastiques comprenant une phase polyoléfinique cristalline continue et au moins deux phases polymères dispersées dans la phase polyoléfinique dont l'une consiste en un caoutchouc de type EPDM durci dynamiquement, et l'autre en un polymère de styrène thermoplastique amorphe choisi parmi les copolymères greffés de caoutchouc EPDM sur du polystyrène ou un copolymère styrène/acrylonitrile, dans lesquels le caoutchouc de type EPDM qui est durci dynamiquement, est un copolymère de propylène avec de l'éthylène et/ou avec une α-oléfine de formule: CH₂=CHR dans laquelle R est un radical alkyle ayant de 2 à 10 atomes de carbone, et avec un diène copolymérisable, le rapport pondéral résine polyoléfinique/caoutchouc de type EPDM étant de 10/90 à 75/25 et le rapport pondéral polymère de styrène/polyoléfine étant de 10/90 à environ 60/40 où au moins 80% des particules des deux phases dispersées ont une dimension maximum de 5µm.

2. Les compositions selon la revendication 1, dans lesquelles la polyoléfine est un polypropylène hautement isotactique.

3. Les compositions élastoplastiques comprenant une phase polyoléfinique continue cristalline et au moins deux phases polymères dispersées dans la phase polyoléfinique, dont l'une consiste en caoutchouc EPDM durci et l'autre en un homopolymère de styrène thermoplastique amorphe et comprenant en outre un agent de compatibilisation choisi parmi: les copolymères greffés de caoutchouc EPDM sur du polystyrène ou sur des copolymères styrène-acrylonibile et des copolymères greffés de styrène sur des poly oléfines, dans lesquels le caoutchouc EPDM, qui est durci dynamiquement, est un copolymère de propylène avec de l'éthylène et/ou avec une alpha-oléfine de formule CH₂ = CHR dans laquelle R est un radical alkyle comportant 2 à 10 atomes de carbone et avec un diène copolymérisable, le rapport pondéral résine de polyoléfine/caoutchouc EPDM étant compris entre 10/90 et 75/25, et le rapport pondéral polymère de styrène/polyoléfines étant compris entre 10/90 et 60/40, dans lequel 80% au moins des particules des deux phases dispersées ont une taille maximum de 5µm.

4. Les compositions selon les revendications 1, 2 et 3 dans lesquelles le caoutchouc EPDM est entièrement durci.

5. Les compositions selon la revendication 3, dans lesquelles la polyoléfine est un polypropylène hautement isotactique et le polymère de styrène est choisi parmi le polystyrène et le polystyrène résistant aux chocs.

6. Les compositions selon les revendications précédentes, dans lesquelles les compositions comprennent une huile diluante et une charge minérale.

7. Un procédé de préparation des compositions telles que revendiquées dans une ou plusieurs des revendications 1 à 2, ou 4 ou 6, dans lequel le polymère oléfinique et le polymère de styrène, mélangés de façon homogène l'un avec l'autre, sont additionnés et mélangés avec le caoutchouc EPDM et le système de durcissement est ajouté au mélange homogène résultant, le malaxage du mélange étant poursuivi à une température comprise entre environ 150 et 280°C pendant une période de temps au cours de laquelle le durcissement du caoutchouc se produit.

8. Un procédé de préparation des compositions selon les revendications 3 à 6, dans lequel le polymère d'oléfine, le polymère de styrène et l'agent de compabilisation, mélangés ensemble de façon homogène, sont additionnés et malaxés avec le caoutchouc EPDM et le système de durcissement est ajouté au mélange homogène obtenu, le malaxage du mélange étant poursuivi à une température comprise entre environ 150°C et 280°C pendant une durée suffisante pour le durcissement du caoutchouc ait lieu.

9. Le procédé selon les revendications 7 ou 8, dans lequel le caoutchouc EPDM subit un durcissement dynamique en présence d'un système de durcissement consistant en une résine phénolique non halogénée utilisée en une quantité de 1 à 10 parties en poids pour 100 parties de caoutchouc.

10. Le procédé selon les revendications 7 à 9, dans lequel le caoutchouc EPDM est entièrement durci

11. Des articles façonnés obtenus à partir de compositions définies dans une ou plusieurs des revendications 1 à 6, et préparés selon un procédé tel que défini dans une ou plusieurs des revendications 7 à 10.

## Revendications (Revendications pour l'(les) Etat(s) contractant(s) suivant(s): ES)

1. Un procédé de préparation de compositions élastoplastiques comprenant une phase polyoléfinique cristalline continue et au moins deux phases polymères dispersées dans la phase polyoléfinique, dont l'une consiste en un caoutchouc de type EPDM durci dynamiquement, et l'autre en un polymère de styrène thermoplastique amorphe choisi parmi les copolymères greffés de caoutchouc EPDM sur du polystyrène ou un copolymère styrène/acrylonitrile, dans lesquels le caoutchouc de type EPDM qui est durci dynamiquement, est un copolymère de propylène avec de l'éthylène et/ou avec une α-oléfine de formule: CH₂=CHR dans laquelle R est un radical alkyle ayant de 2 à 10 atomes de carbone, et avec un diène copolymérisable, le rapport pondéral résine polyoléfinique/caoutchouc de type EPDM étant de 10/90 à 75/25 et le rapport pondéral polymère de styrène/polyoléfine étant de 10/90 à environ 60/40 où au moins 80% des particules des deux phases dispersées ont une dimension maximum de 5µm.

2. Le procédé selon la revendication 1, dans lequel le polymère d'oléfine est du polypropylène hautement isotactique.

3. Un procédé de préparation de compositions élastoplastiques comprenant une phase polyoléfinique continue cristalline et au moins deux phases polymères dispersées dans la phase polyoléfinique, dont l'une consiste en caoutchouc EPDM durci et l'autre un homopolymère de styrène thermoplastique amorphe et comprenant en outre un agent de compatibilisation choisi parmi les copolymères greffés de caoutchouc EPDM sur du polystyrène ou sur des copolymères styrène-acrylonibile et des copolymères greffés de styrène sur des polyoléfines, dans lesquels le caoutchouc EPDM, qui est durci dynamiquement, est un copolymère de propylène avec de l'éthylène et/ou avec une α-oléfine de formule CH₂ = CHR dans laquelle R est un radical alkyle comportant 2 à 10 atomes de carbone et avec un diène copolymérisable, le rapport pondéral résine de polyoléfine/caoutchouc EPDM étant compris entre 10/90 et 75/25 et le rapport pondéral polymère de styrène/polyoléfines étant compris entre 10/90 et 60/40, dans lequel 80% au moins des particules des deux phases dispersées ont une taille maximum de 5µm; dans ledit procédé, le polymère oléfinique et le polymère de styrène, mélangés de façon homogène l'un avec l'autre, sont additionnés et mélangés avec le caoutchouc EPDM et le système de durcissement est ajouté au mélange homogène résultant, le malaxage du mélange étant poursuivi à une température comprise entre 150 et 280°C pour une période de temps au cours de laquelle le durcissement du caoutchouc se produit.

4. Le procédé selon les revendications 1 2 et 3, dans lequel le caoutchouc EPDM est entièrement durci.

5. Le procédé selon les revendications 3 et 4, dans lequel le polymère d'oléfine est un polymère de propylène hautement isotactique et le polymère de styrène est choisi parmi le polystyrène et le polystyrène résistant au choc.

6. Le procédé selon les revendications précédentes, dans lequel on ajoute une huile diluante et une charge minérale et on malaxe.

7. Le procédé selon les revendications 1 à 6, dans lequel le durcissement du caoutchouc EPDM est un procédé dynamique mis en oeuvre en présence d'un système de durcissement consistant en une résine phénolique non halogénée utilisée en une quantité de 1 à 10 parties en poids pour 100 parties de caoutchouc
